# EUROPEAN PATENT SPECIFICATION

(11) **EP 3 926 840 B1**
(45) Date of publication and mention of the grant of the patent: **01.11.2023**
(21) Application number: 20216304.4
(22) Date of filing: 22.12.2020
(51) Int. Cl.: H04B 3/32

(54) **TRANSMIT CROSSTALK CANCELLATION SYSTEM**
SYSTEM ZUR UNTERDRÜCKUNG VON SENDENEBENSPRECHEN
SYSTÈME D'ANNULATION DE DIAPHONIE DE TRANSMISSION

(30) Priority: 16.06.2020 US 202016903354
(43) Date of publication of application: 22.12.2021
(73) Proprietor: INTEL Corporation, Santa Clara, CA 95054 (US)
(72) Inventor: MCCALL, James Alexander, Santa Clara, CA California 95054 (US); CHU, Yunhui, Santa Clara, CA California 95054 (US); MOZAK, Christopher Philip, Santa Clara, CA California 95054 (US); CONROW, Derek M., Santa Clara, CA California 95054 (US); KARL, Christian, Santa Clara, CA California 95054 (US)
(74) Representative: Rummler, Felix

(56) References cited:
- EP-A1- 2 301 163
- EP-B1- 2 301 163

## Description

### BACKGROUND

A computer system may include various components that communicate with each other over communication channels. Such components may include, for example, one or more central processing units (CPUs), storage devices, memory devices, or other input/output devices.

EP 2301163 A1 describes a method of cancelling inductance-dominated crosstalk using a capacitive coupling circuit. It also presents a method of calibrating, selecting and programming a capacitance value used for coupling, so as to add a derivative of each aggressor signal to each victim signal, and thereby negate crosstalk that would otherwise be seen by a given receiver. Cross-coupling circuits are used between each pair of "nearest neighbors" with values calibrated and used for each particular transmitter-receiver pair in the context of multiple-line bus.

### SUMMARY OF INVENTION

The present invention is defined in the independent claims. The dependent claims recite selected optional features. In the following, each of the described methods, apparatuses, examples, and aspects, which do not fully correspond to the invention as defined in the claims is thus not according to the invention and is, as well as the whole following description, present for illustration purposes only or to highlight specific aspects or features of the claims.

### BRIEF DESCRIPTION OF THE DRAWINGS

FIG. 1 illustrates a block diagram of components of a computer system in accordance with certain embodiments.
FIG. 2 illustrates a transmit crosstalk cancelation system for a single victim data line in accordance with certain embodiments.
FIG. 3 illustrates example waveforms illustrating crosstalk cancelation that may be performed by a crosstalk cancelation system in accordance with certain embodiments.
FIG. 4 illustrates a transmit crosstalk cancelation system for two victim data lines in accordance with certain embodiments.
FIG. 5 illustrates a transmit crosstalk cancelation system enabling selectable aggressor data lines in accordance with certain embodiments.
FIG. 6 illustrates a transmit crosstalk cancelation system for differential pair data lines in accordance with certain embodiments.
FIG. 7 illustrates a flow for canceling crosstalk in accordance with certain embodiments.

Like reference numbers and designations in the various drawings indicate like elements.

### DETAILED DESCRIPTION

Although the drawings depict particular computer systems, the concepts of various embodiments are applicable to any suitable integrated circuits and other logic devices. Examples of devices in which teachings of the present disclosure may be used include desktop computer systems, server computer systems, storage systems, handheld devices, tablets, other thin notebooks, systems on a chip (SOC) devices, and embedded applications. Some examples of handheld devices include cellular phones, digital cameras, media players, personal digital assistants (PDAs), and handheld PCs. Embedded applications may include, e.g., a microcontroller, a digital signal processor (DSP), an SOC, a network computer (NetPC), a settop box, a network hub, a wide area network (WAN) switch, or any other system that can perform the functions and operations taught below. Various embodiments of the present disclosure may be used in any suitable computing environment, such as a personal computing device, a server, a mainframe, a cloud computing service provider infrastructure, a datacenter, a communications service provider infrastructure (e.g., one or more portions of an Evolved Packet Core), or other environment comprising a group of computing devices.

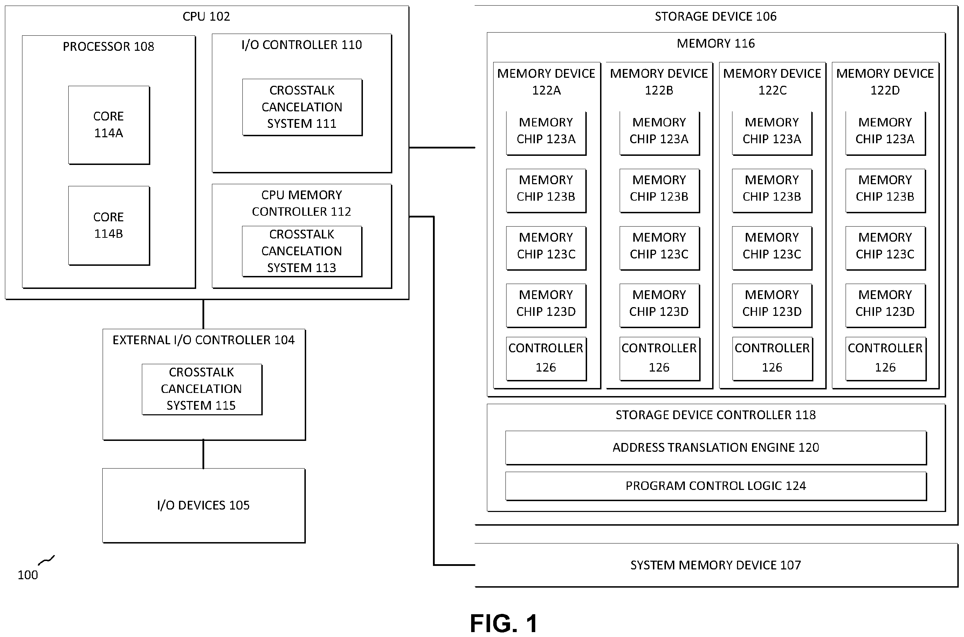

**FIG. 1** illustrates a block diagram of components of a computer system 100 in accordance with certain embodiments. System 100 includes a central processing unit (CPU) 102 coupled to an external input/output (I/O) controller 104, storage device 106, and system memory device 107. During operation, data may be transferred between the CPU 102 and one or more of storage device 106, system memory device 107, or other I/O devices 105. In some instances, data may be transferred directly between two or more of storage device 106, system memory device 107, and/or other I/O devices 105. In various embodiments, particular data operations (e.g., erase, program, and read operations) or other communications involving a storage device 106, system memory device 107, or other I/O devices 105 may be managed by an operating system or other software application executed by processor 108.

High bandwidth over communication channels is an important aspect of a high performance system. For example, memory bandwidth is a key enabler for scaling CPU performance. Communication channels which include multiple data lines may suffer from various forms of crosstalk in which a signal transmitted on one data line may create an undesirable effect on one or more other data lines. Crosstalk may be caused, e.g., by capacitive, inductive, or conductive coupling between an aggressor data line and a victim data line. Far end crosstalk results from the coupling between two or more transmitting data lines as a signal propagates from the transmit side to the receive side. The crosstalk may result in a distortion of a signal transmitted over the victim data line due to interference from a signal transmitted over an aggressor data line. The effect of far end crosstalk may be particularly significant in single-ended data lines. The primary signaling interfaces for system memories are single-ended due to cost, power, and performance requirements. Accordingly, far end crosstalk is a major factor for channel performance degradation for memory interfaces (and other single-ended signaling interfaces).

Passive far end crosstalk mitigation methods (e.g., tabbed routing, coupled via, etc.) tend to be limited to local crosstalk mitigation (e.g., a connector or socket) but are generally not effective at cancelling the summation of crosstalk factors across a communication channel. Such approaches may also present physical implementation challenges as they need to be close to the crosstalk noise source which may result in increased cost for the system (e.g., package, printed circuit board (PCB), or socket technology).

Receiver (RX) side active far end crosstalk cancelation methods may require RX crosstalk cancellation on each side of a bi-directional interface in order to be effective (e.g., a host device may implement RX side crosstalk cancelation when receiving data from an I/O device and the I/O device may implement RX side crosstalk cancelation when receiving data from the host device). However, such methods may be challenging to implement on certain I/O devices (e.g., dynamic random-access memory (DRAM) memories) due to process limitations (e.g., metal routing, process bandwidth) and may require more complex training/feedback implementation to adjust for system variations.

Active magnitude/phase based far end crosstalk cancelation techniques may result in much higher power and silicon cost, can result in negative loading to the victim data line which can offset the gain in crosstalk reduction, or may not provide substantial improvements in system performance.

Various embodiments of the present disclosure provide novel approaches to mitigating far end crosstalk. One embodiment provides a transmit crosstalk cancelation approach using an alternating current (AC) coupled pulse to cancel the far end crosstalk to enable higher signaling rates without incurring significant platform cost. An embodiment includes an auxiliary driver (e.g., a simple non-linear low cost driver) that is AC coupled to the victim data line via a capacitor. In various embodiments, one or more parameters of the auxiliary driver or capacitor may be tuned to optimize the cancelation of far end crosstalk on the victim data line. Technical advantages provided by one or more of the embodiments described herein may include one or more of increased communication bandwidth, lower-cost far end crosstalk reduction, a simplified training procedure, or effective far end crosstalk reduction using implementation on only one side of a communication channel (e.g., a CPU may implement the solution and an I/O device may omit implementation of the solution, thus negating a need to change an existing specification, such as a Joint Electron Device Engineering Council (JEDEC) specification or peripheral component interconnect (PCI) specification).

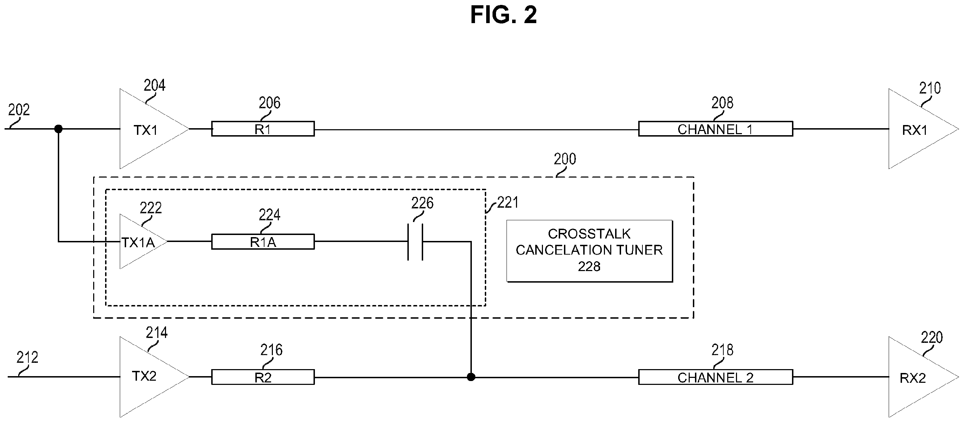

The embodiment depicted shows various components implementing crosstalk cancelation. For example, I/O controller 110 includes crosstalk cancelation system 111, CPU memory controller 112 includes crosstalk cancelation system 113, and external I/O controller 104 includes crosstalk cancelation system 115. In other embodiments, any one or more components of a computer system or device may implement a crosstalk cancelation system according to any of the embodiments described herein. Thus, any one or more of storage device 106, system memory device 107, or I/O devices 105 may implement a crosstalk cancelation system as described herein. Example crosstalk cancelation systems will be described in more detail in connection with FIGs. 2 and 4-6.

CPU 102 comprises a processor 108, such as a microprocessor, an embedded processor, a digital signal processor (DSP), a network processor, a handheld processor, an application processor, a co-processor, an SOC, or other device to execute code (i.e., software instructions). Processor 108, in the depicted embodiment, includes two processing elements (cores 114A and 114B), which may include asymmetric processing elements or symmetric processing elements. However, a processor may include any number of processing elements that may be symmetric or asymmetric.

In one embodiment, a processing element refers to hardware or logic to support a software thread. Examples of hardware processing elements include: a thread unit, a thread slot, a thread, a process unit, a context, a context unit, a logical processor, a hardware thread, a core, and/or any other element, which is capable of holding a state for a processor, such as an execution state or architectural state. In other words, a processing element, in one embodiment, refers to any hardware capable of being independently associated with code, such as a software thread, operating system, application, or other code. A physical processor (or processor socket) typically refers to an integrated circuit, which potentially includes any number of other processing elements, such as cores or hardware threads.

A core 114 may refer to logic located on an integrated circuit capable of maintaining an independent architectural state, wherein each independently maintained architectural state is associated with at least some dedicated execution resources. A hardware thread may refer to any logic located on an integrated circuit capable of maintaining an independent architectural state, wherein the independently maintained architectural states share access to execution resources. As can be seen, when certain resources are shared and others are dedicated to an architectural state, the line between the nomenclature of a hardware thread and core overlaps. Yet often, a core and a hardware thread are viewed by an operating system as individual logical processors, where the operating system is able to individually schedule operations on each logical processor.

In various embodiments, the processing elements may also include one or more arithmetic logic units (ALUs), floating point units (FPUs), caches, instruction pipelines, interrupt handling hardware, registers, or other hardware to facilitate the operations of the processing elements.

I/O controller 110 is an integrated I/O controller that includes logic for communicating data between CPU 102 and I/O devices. I/O devices (e.g., I/O devices coupled to I/O controller 110 or I/O devices 105) may refer to any suitable devices capable of transferring data to and/or receiving data from an electronic system, such as CPU 102. For example, an I/O device may comprise an audio/video (A/V) device controller such as a graphics accelerator or audio controller; a data storage device controller, such as a flash memory device, magnetic storage disk, or optical storage disk controller; a wireless transceiver; a network processor; a network interface controller; or a controller for another input devices such as a monitor, printer, mouse, keyboard, or scanner; or other suitable device. In a particular embodiment, an I/O device may comprise a storage device 106 that may be coupled to the CPU 102 through I/O controller 110.

An I/O device may communicate with the I/O controller 110 of the CPU 102 using any suitable signaling protocol, such as peripheral component interconnect (PCI), PCI Express (PCIe), Universal Serial Bus (USB), Serial Attached SCSI (SAS), Serial ATA (SATA), Fibre Channel (FC), IEEE 802.3, IEEE 802.11, or other current or future signaling protocol. In particular embodiments, I/O controller 110 and an associated I/O device may communicate data and commands in accordance with a logical device interface specification such as Non-Volatile Memory Express (NVMe) (e.g., as described by one or more of the specifications available at www.nvmexpress.org/specifications/) or Advanced Host Controller Interface (AHCI) (e.g., as described by one or more AHCI specifications such as Serial ATA AHCI: Specification, Rev. 1.3.1 available at http://www.intel.com/content/www/us/en/io/serial-ata/serial-ata-ahci-spec-rev1-3-1.html). In various embodiments, I/O devices coupled to the I/O controller 110 may be located off-chip (e.g., not on the same chip as CPU 102) or may be integrated on the same chip as the CPU 102.

CPU memory controller 112 is an integrated memory controller that controls the flow of data going to and from one or more system memory devices 107. CPU memory controller 112 may include logic operable to read from a system memory device 107, write to a system memory device 107, or to request other operations from a system memory device 107. In various embodiments, CPU memory controller 112 may receive write requests from cores 114 and/or I/O controller 110 and may provide data specified in these requests to a system memory device 107 for storage therein. CPU memory controller 112 may also read data from a system memory device 107 and provide the read data to I/O controller 110 or a core 114. During operation, CPU memory controller 112 may issue commands including one or more addresses of the system memory device 107 in order to read data from or write data to memory (or to perform other operations). In some embodiments, CPU memory controller 112 may be implemented on the same chip as CPU 102, whereas in other embodiments, CPU memory controller 112 may be implemented on a different chip than that of CPU 102. I/O controller 110 may perform similar operations with respect to one or more storage devices 106.

The CPU 102 may also be coupled to one or more other I/O devices 105 through external I/O controller 104. In a particular embodiment, external I/O controller 104 may couple a storage device 106 to the CPU 102. External I/O controller 104 may include logic to manage the flow of data between one or more CPUs 102 and I/O devices 105. In particular embodiments, external I/O controller 104 is located on a motherboard along with the CPU 102. The external I/O controller 104 may exchange information with components of CPU 102 using point-to-point or other interfaces.

A system memory device 107 may store any suitable data, such as data used by processor 108 to provide the functionality of computer system 100. For example, data associated with programs that are executed or files accessed by cores 114 may be stored in system memory device 107. Thus, a system memory device 107 may include a system memory that stores data and/or sequences of instructions that are executed or otherwise used by the cores 114. In various embodiments, a system memory device 107 may store temporary data, persistent data (e.g., a user's files or instruction sequences) that remains stored even after power to the system memory device 107 is removed, or a combination thereof. A system memory device 107 may be dedicated to a particular CPU 102 or shared with other devices (e.g., one or more other processors or other devices) of computer system 100.

In various embodiments, a system memory device 107 may include a memory comprising any number of memory arrays, a memory device controller, and other supporting logic (not shown). A memory array may include non-volatile memory and/or volatile memory. Non-volatile memory is a storage medium that does not require power to maintain the state of data stored by the medium (thus non-volatile memory may have a determinate state even if power is interrupted to the device). Nonlimiting examples of nonvolatile memory may include any or a combination of: solid state memory (such as planar or 3D NAND flash memory or NOR flash memory), 3D crosspoint memory, memory devices that use chalcogenide phase change material (e.g., chalcogenide glass), byte addressable nonvolatile memory devices, ferroelectric memory, silicon-oxide-nitride-oxide-silicon (SONOS) memory, polymer memory (e.g., ferroelectric polymer memory), ferroelectric transistor random access memory (Fe-TRAM) ovonic memory, nanowire memory, electrically erasable programmable read-only memory (EEPROM), other various types of non-volatile random access memories (RAMs), and magnetic storage memory. In some embodiments, 3D crosspoint memory may comprise a transistor-less stackable cross point architecture in which memory cells sit at the intersection of words lines and bit lines and are individually addressable and in which bit storage is based on a change in bulk resistance.

Volatile memory is a storage medium that requires power to maintain the state of data stored by the medium (thus volatile memory is memory whose state (and therefore the data stored on it) is indeterminate if power is interrupted to the device). Dynamic volatile memory requires refreshing the data stored in the device to maintain state. One example of dynamic volatile memory includes DRAM (dynamic random access memory), or some variant such as synchronous DRAM (SDRAM). A memory subsystem as described herein may be compatible with a number of memory technologies, such as DDR3 (double data rate version 3, original release by JEDEC (Joint Electronic Device Engineering Council) on June 27, 2007, currently on release 21), DDR4 (DDR version 4, JESD79-4 initial specification published in September 2012 by JEDEC), DDR4E (DDR version 4, extended, currently in discussion by JEDEC), LPDDR3 (low power DDR version 3, JESD209-3B, Aug 2013 by JEDEC), LPDDR4 (LOW POWER DOUBLE DATA RATE (LPDDR) version 4, JESD209-4, originally published by JEDEC in August 2014), WIO2 (Wide I/O 2 (WideIO2), JESD229-2, originally published by JEDEC in August 2014), HBM (HIGH BANDWIDTH MEMORY DRAM, JESD235, originally published by JEDEC in October 2013), DDR5 (DDR version 5, currently in discussion by JEDEC), LPDDR5, originally published by JEDEC in January 2020, HBM2 (HBM version 2), originally published by JEDEC in January 2020, or others or combinations of memory technologies, and technologies based on derivatives or extensions of such specifications.

A storage device 106 may store any suitable data, such as data used by processor 108 to provide functionality of computer system 100. For example, data associated with programs that are executed or files accessed by cores 114A and 114B may be stored in storage device 106. Thus, in some embodiments, a storage device 106 may store data and/or sequences of instructions that are executed or otherwise used by the cores 114A and 114B. In various embodiments, a storage device 106 may store persistent data (e.g., a user's files or software application code) that remains stored even after power to the storage device 106 is removed. A storage device 106 may be dedicated to CPU 102 or shared with other devices (e.g., another CPU or other device) of computer system 100.

In the embodiment depicted, storage device 106 includes a storage device controller 118 and a memory 116 comprising four memory devices 122A-D operable to store data, however, a storage device may include any suitable number of memory devices. A storage device 106 may include any number of memories 116 and each memory 116 may include any number of memory devices 122 (e.g., 122A-D). In a particular embodiment, a memory device 122 may be or comprise a semiconductor package with one or more memory chips 123 (e.g., memory chips 123A-D). In the embodiment depicted, memory 116 includes memory devices 122A-D (while specific references herein may be made to memory device 122A, the other memory devices may have any suitable characteristics of memory device 122A) and memory device controller 126.

A memory device 122A (e.g., each memory chip of the memory device) includes a plurality of memory cells that are each operable to store one or more bits. The cells of a memory device 122A may be arranged in any suitable fashion, such as in rows (e.g., wordlines) and columns (e.g., bitlines), three dimensional structures, and/or other manner. In various embodiments, the cells may be logically grouped into banks, blocks, subblocks, planes, wordlines, pages, frames, bytes, or other suitable groups.

A memory device 122A may include any of the volatile or non-volatile memories listed above or other suitable memory. In particular embodiments, memory device 122A includes non-volatile memory, such as planar or 3D NAND flash memory. In particular embodiments, a memory device 122A with non-volatile memory may comply with one or more standards for non-volatile memory promulgated by JEDEC, such as JESD218, JESD219, JESD220-1, JESD220C, JESD223C, JESD223-1, or other suitable existing or future standard (the JEDEC standards cited herein are available at www.jedec.org). In particular embodiments, the storage device comprises NAND flash memory that complies with one or more portions of a standard promulgated by JEDEC for SDRAM memory, such as one of the DDR-based standards noted above. Communication interfaces of the storage devices that implement such standards may be referred to as DDR-based interfaces. For example, a storage device 106 comprising NAND flash memory may receive a command that has a format compliant with a DDR-based standard and may translate the command into one or more commands that are compatible with NAND flash memory of the storage device 106. Similarly, the storage device 106 may format results from operations performed on the NAND flash memory into a format that is compliant with a DDR-based standard before transmitting the results to the CPU 102.

In various embodiments, a storage device 106 comprises NAND flash memory (herein a storage device comprising NAND flash memory is referred to as a NAND flash storage device). In some embodiments, storage device 106 may be a solid-state drive; a memory card; a Universal Serial Bus (USB) flash drive; or memory integrated within a device such as a smartphone, camera, media player, or other computing device. In general, storage devices with NAND flash memory are classified by the number of bits stored by each cell of the memory. For example, a single-level cell (SLC) memory has cells that each store one bit of data, a multi-level cell (MLC) memory has cells that each store two bits of data, a tri-level cell (TLC) memory has cells that each store three bits of data, and a quad-level cell (QLC) memory has cells that each store four bits of data, though some memories may utilize multiple encoding schemes (e.g., MLC and TLC) on the same array or on different arrays of the same device.

In a particular embodiment, a memory device 122 is a semiconductor package. In various embodiments, a semiconductor package may comprise a casing comprising one or more semiconductor dies (also referred to as chips), such as memory chips 123A-D. A package may also comprise contact pins or leads used to connect to external circuits. However, a package is merely one example form a memory device 122 may take as a memory device may be any suitable arrangement of one or more memory arrays and associated logic in any suitable physical arrangement. For example, although a single physical package may include a single memory device 122, multiple memory devices 122 could be resident on a single package or a memory device 122 could be spread across multiple packages.

A memory 116 may be embodied in one or more different physical mediums, such as a circuit board, die, disk drive, other medium, or any combination thereof (or combination with one or more packages). In a particular embodiment, memory 116 comprises a circuit board coupled to a plurality of memory devices 122 that each comprise a semiconductor package.

Storage device 106 and system memory device 107 may comprise any suitable types of memory and are not limited to a particular speed, technology, or form factor of memory in various embodiments. For example, a storage device 106 may be a disk drive (such as a solid-state drive), a flash drive, memory integrated with a computing device (e.g., memory integrated on a circuit board of the computing device), a memory module (e.g., a dual in-line memory module) that may be inserted in a memory socket, or other type of storage device. Similarly, system memory 107 may have any suitable form factor. Moreover, computer system 100 may include multiple different types of storage devices.

System memory device 107 or storage device 106 may include any suitable interface to communicate with CPU memory controller 112 or I/O controller 110 using any suitable communication protocol such as a DDR-based protocol, PCI, PCIe, USB, SAS, SATA, FC, System Management Bus (SMBus), or other suitable protocol. In some embodiments, a system memory device 107 or storage device 106 may include a communication interface to communicate with CPU memory controller 112 or I/O controller 110 in accordance with any suitable logical device interface specification such as NVMe, AHCI, or other suitable specification. In particular embodiments, system memory device 107 or storage device 106 may comprise multiple communication interfaces that each communicate using a separate protocol with CPU memory controller 112 and/or I/O controller 110.

Storage device controller 118 may include logic to receive requests from CPU 102 (e.g., via CPU memory controller 112 or I/O controller 110), cause the requests to be carried out with respect to a memory 116 (or memory devices(s) and/or memory chip(s) thereof), and provide data associated with the requests to CPU 102 (e.g., via CPU memory controller 112 or I/O controller 110). Controller 118 may also be operable to detect and/or correct errors encountered during memory operation. In an embodiment, controller 118 also tracks the number of times particular cells (or logical groupings of cells) have been written to in order to perform wear leveling and/or to detect when cells are nearing an estimated number of times they may be reliably written to. In performing wear leveling, the storage device controller 118 may evenly spread out write operations among blocks of the memory of a memory 116 such that particular blocks are not written to more than other blocks. In various embodiments, controller 118 may also monitor various characteristics of the storage device 106 such as the temperature or voltage and report associated statistics to the CPU 102. Storage device controller 118 can be implemented on the same circuit board or device as a memory 116 or on a different circuit board, or device. For example, in some environments, storage device controller 118 may be a centralized storage controller that manages memory operations for multiple different memories 116 (which may each be of the same type of memory or may be of different types) of computer system 100 (and thus may provide storage device controller functionality described herein to any of the memories to which it is coupled).

In various embodiments, the storage device 106 also includes an address translation engine 120. In the depicted embodiment, the address translation engine 120 is shown as part of the storage device controller 118, although in various embodiments, the address translation engine 120 may be separate from the storage device controller 118 and communicably coupled to the storage device controller 118. In various embodiments, the address translation engine 120 may be integrated on the same chip or package as the storage device controller 118 or on a different chip or package.

In various embodiments, address translation engine 120 may include logic to store and update a mapping between a logical address space (e.g., an address space visible to a host computing device coupled to the storage device 106) and the physical address space of the memory 116 of the storage device 106 (which may or may not be exposed to the host computing device). The logical address space may expose a plurality of logical groups of data which are physically stored on corresponding physical groups of memory addressable through the physical address space of the storage device 106. A physical address of the physical address space may comprise any suitable information identifying a physical memory location (e.g., a location within a memory array of a memory 116) of the storage device 106, such as an identifier of the memory 116 on which the physical memory location is located, an identifier of the memory device 122A on which the physical memory location is located, one or more pages of the physical memory location, one or more subblocks of the physical memory location, one or more wordlines of the physical memory location, one or more bitlines of the physical memory location, or other suitable identifiers or encodings thereof.

In various embodiments, the storage device 106 also includes program control logic 124 which alone or in combination with a controller 126 of a memory device 122 is operable to control the programming sequence performed when data is written to a memory 116, the read sequence performed when data is read from a memory 116, or an erase sequence when data is erased from a memory 116. In various embodiments, program control logic 124 may provide the various voltages (or information indicating which voltages should be provided) that are applied to one or more memory cells, wordlines, bitlines, and/or other portions of a memory array during the programming, reading, and/or erasing of data, perform error correction, and perform other suitable functions.

In various embodiments, the program control logic 124 may be integrated on the same chip as the storage device controller 118 or on a different chip. In the depicted embodiment, the program control logic 124 is shown as part of the storage device controller 118, although in various embodiments, all or a portion of the program control logic 124 may be separate from the storage device controller 118 and communicably coupled to the storage device controller 118. For example, all or a portion of the program control logic 124 may be located on the same package or chip as a memory 116 and/or memory devices 122A-D.

In some embodiments, all, or some of the elements of system 100 are resident on (or coupled to) the same circuit board (e.g., a motherboard). In various embodiments, any suitable partitioning between the elements may exist. For example, the elements depicted in CPU 102 may be located on a single die (i.e., on-chip) or package or any of the elements of CPU 102 may be located off-chip or off-package. Similarly, the elements depicted in storage device 106 may be located on a single chip or on multiple chips. In various embodiments, a storage device 106 and a host computing device (e.g., CPU 102) may be located on the same circuit board or on the same device and in other embodiments the storage device 106 and the host computing device may be located on different circuit boards or devices.

The components of system 100 may be coupled together in any suitable manner. For example, a bus may couple any of the components together. A bus may include any suitable interconnect, such as a multi-drop bus, a mesh interconnect, a ring interconnect, a point-to-point interconnect, a serial interconnect, a parallel bus, a coherent (e.g. cache coherent) bus, a layered protocol architecture, a differential bus, or a Gunning transceiver logic (GTL) bus. In various embodiments, an integrated I/O subsystem includes point-to-point multiplexing logic between various components of system 100, such as cores 114, one or more CPU memory controllers 112, I/O controller 110, integrated I/O devices, direct memory access (DMA) logic (not shown), etc. In various embodiments, components of computer system 100 may be coupled together through one or more networks comprising any number of intervening network nodes, such as routers, switches, or other computing devices. For example, a host computing device (e.g., CPU 102) and the storage device 106 may be communicably coupled through a network.

Although not depicted, system 100 may use a battery and/or power supply outlet connector and associated system to receive power, a display to output data provided by CPU 102, or a network interface allowing the CPU 102 to communicate over a network. In various embodiments, the battery, power supply outlet connector, display, and/or network interface may be communicatively coupled to CPU 102. Other sources of power can be used such as renewable energy (e.g., solar power or motion based power).

**FIG. 2** illustrates a transmit crosstalk cancelation system 200 for a single victim data line 212 in accordance with certain embodiments. FIG. 2 depicts an aggressor data line 202 that is the source of the crosstalk on the victim data line 212. Data transmitted on data line 202 is received at driver 204 (which may be referred to herein as a "main driver" for data line 202), which has an output impedance 206. The output of the main driver 204 is sent across channel 208 to the receiver 210. Similarly, data transmitted on data line 212 is received at driver 214 (which may be referred to herein as a "main driver" for data line 212) having an output impedance 216. The output of the main driver 214 is sent across channel 218 to the receiver 220. The channels 208 and 218 may include the communication paths between the outputs of the main drivers 204 and 214 and the inputs of the receivers 210 and 220. For example, such a path may include conductive traces, bonding pads, pins, or other suitable elements (e.g., of a CPU and of an I/O device). Transmission of data on the aggressor data line 202 from the main driver 204 to the receiver 210 may result in interference on victim data line 212 due to far end crosstalk.

The far end crosstalk cancelation system 200 includes crosstalk cancelation circuitry 221 and crosstalk cancelation tuner 228. The crosstalk cancelation circuitry 221 includes an auxiliary driver 222 having an output impedance 224. Circuitry 221 also includes a capacitor 226. The auxiliary driver 222 is coupled to the data line 202 at a node prior to the main driver 204. In various embodiments, the auxiliary driver 222 receives the same input signal as the main driver 204, or essentially the same input signal (e.g., the input signal could be buffered after the node before being provided to auxiliary driver 222 and/or main driver 204).

The coupling capacitor 226 forms a high-pass filter (HPF) with the output impedance 206 of the main driver 204 to take the aggressor signal as input and generate a compensation signal that cancels the far end crosstalk on the victim data line 212. The polarity of the effect of the compensation signal is opposite to that of the effect of the aggressor crosstalk. In most systems, crosstalk is predominately inductive. Inductive coupling has the opposite effect on a victim compared to capacitive coupling. Therefore, at least in some embodiments, in order to cancel out inductive far-end crosstalk cause by an aggressor by using a capacitively coupled aggressor, there would be no inversion in the polarity of the aggressor signal itself. In order to maximize the cancelation effect, the magnitude of the compensation signal should match that of the far end crosstalk as closely as possible. In various embodiments, the magnitude of the compensation signal may be varied by tuning one or more parameters via crosstalk cancelation tuner 228 as described below. In other embodiments, the parameters that affect the magnitude of the compensation signal are fixed (e.g., careful engineering may result in parameter values that cause the magnitude of the compensation signal to be within a desired margin of the magnitude of the far end crosstalk signal).

The auxiliary driver 222 may be similar to the main driver 204 (e.g., may have any suitable similar characteristics, such as generally similar slew rates (e.g., within 5% of each other)), but in various embodiments may be much smaller than the main driver 204 (although alternatively it could be the same size as the main driver 204 or other suitable size). For example, the size of the area occupied by the auxiliary driver 222 may be a fraction (e.g., about 1/10) of the size of the area occupied by the main driver 204, although in general the size of the auxiliary driver 222 may be based on the size of capacitor 226 which is driven by the auxiliary driver 222 and the slew rate of the auxiliary driver 222. In some embodiments, the main driver 204 (and 214) may be a linear driver (e.g., the relationship between voltage and current is substantially linear such that impedance 206 closely models an ideal resistor across a range of voltages), but the auxiliary driver 222 is not linear, which may allow for reduced die area, loading, and power for the crosstalk cancelation circuitry 221. In general, the main driver 204 may be any type of driver that is suitable to transmit a signal across channel 208 at an acceptable bandwidth. In one example, main driver 204 is a voltage-mode driver. In another example, main driver 204 is a current-mode driver. Main driver 204 may have any suitable characteristics such as configurable equalization capabilities (e.g., for example, the driver may comprise multiple taps that may be used to adjust equalization performed on the signal transmitted by the main driver 204).

Each output impedance (e.g., 206, 216, and 224) may represent an output impedance caused naturally by the effect of the components of the respective driver. Additionally or alternatively, an output impedance may include an impedance from one or more discrete resistive components coupled to the output of the drivers. In various embodiments, the output impedance 224 of the auxiliary driver 222 may be larger than the output impedance 206 of the main driver 204 (e.g., because the impedance 224 of the auxiliary driver 222 is not dependent on the impedance of the channel 208). For example, in various embodiments, the impedance 206 may be within the 20 to 50 ohm range, while the impedance 224 may be within the 100 to 10 kiloohm range (though other embodiments may utilize any suitable impedance values).

The capacitor 226 may be a single discrete capacitor or a plurality of discrete capacitors (e.g., in parallel) having an effective capacitance value. In various embodiments, the capacitance value of capacitor 226 may be a variable parameter. In various embodiments, the capacitance of capacitor 226 may be within the 100 to 500 femtofarad range, although the embodiments are not limited thereto. In other embodiments, the capacitor 226 may be replaced with active circuitry (e.g., a current source).

Crosstalk cancelation tuner 228 may adjust one or more parameters of the crosstalk cancelation circuitry 221. Example parameters that may be adjustable in some embodiments include impedance 224, a slew rate of auxiliary driver 222, an amplification/attenuation factor of auxiliary driver 222 (to control the magnitude of the output of the driver 222), a phase delay (e.g., of auxiliary driver 222 or of a delay circuit placed elsewhere in the path of circuitry 221, such as before auxiliary driver 222), or the capacitance of capacitor 226. The magnitude of the crosstalk cancelation signal may be adjusted based on the magnitude of the crosstalk through a training procedure so as to match the magnitudes as closely as feasible. For example, the magnitude of the crosstalk cancelation signal output by crosstalk cancelation circuitry 221 to the victim data line 212 may be adjusted through amplification/attenuation via auxiliary driver 222, through adjustment of the slew rate of auxiliary driver 222, through adjustment of impedance 224, or through adjustment of the capacitance of capacitor 226). The phase of the crosstalk cancelation signal output by circuitry 221 may be adjusted based on the phase of the crosstalk signal through a training procedure so as to match the phases as closely as feasible. In general, the phase delay through a main driver (e.g., 204) is larger than the phase delay through an auxiliary driver (e.g., 222) so additional delay through the crosstalk cancelation circuitry 221 may be included in order to match the phase of the cancelation signal to the phase of the crosstalk signal. In some examples, a delay circuit of the circuitry 221 may be adjustable in roughly 5 or 10 picosecond intervals. In some embodiments, one or more of the parameters described above may be fixed (while one or more other parameters are adjustable by the crosstalk cancelation tuner 228).

Any suitable training procedure may be performed to select the values of the one or more adjustable parameters. For example, initial values for one or more of the adjustable parameters may be set (e.g., based on circuit simulations or other information). Training data may then be sent on data lines 202 and 212 across respective channels 208 and 218 to receivers 210 and 220. A number of errors associated with the transmission of the training data is determined. The values of one or more of the adjustable parameters may be changed and the training data is sent again on data lines 202 and 212. A number of errors for this new set of parameter values is determined. This may be repeated for any number of different combinations of values for the adjustable parameters. A parameter set is chosen from among the parameter sets that were tested during training (e.g., the parameter set that resulted in the fewest errors, the parameter set that provided the best combination of error rate and power usage, or selection based on other suitable criteria). In general, the number of errors is dependent on how closely the magnitude and phase of the crosstalk cancelation signal matches the crosstalk signal.

In some embodiments, training may include setting initial values for the adjustable parameters and then sweeping the values for one particular parameter and determining performance characteristics (e.g., bit error rate, power consumption, etc.) at each of the values of the particular parameter. The swept parameter may then be set to the value that resulted in the best results. Subsequently, a different parameter may be swept and the value that provides the best result may be used to set the parameter. This may be repeated for any number of adjustable parameters to arrive at the parameter set to be used in operation. In some embodiments, once a parameter set with acceptable results is obtained, the training process for the particular data line may be terminated.

In some embodiments, an entire link comprising multiple data lines may be trained using any suitable link training process prior to performing crosstalk cancelation training on one or more data lines of the link. For example, the link training may involve setting preemphasis or equalization values for various data lines. Each data line may then be examined. If a particular data line is not performing at a level above a particular threshold, then crosstalk cancelation may be activated for that data line and the data line may be trained to adjust the parameters of a crosstalk cancelation circuit coupled to that data line. In some embodiments, crosstalk cancelation for multiple data lines may be activated and each data line may be trained appropriately (in some embodiments, the crosstalk cancelation training may be performed for multiple data lines simultaneously).

In some embodiments, when crosstalk cancelation training is performed for a data line, a device (e.g., a DIMM module) comprising the receiver 210 may provide bit error results to a component of the host device (e.g., CPU memory controller 112) through a side channel between the device and the host or the device may write the results to a location of the host (e.g., a BIOS) where the component performing the training (e.g., CPU memory controller 112) may retrieve the results for use in comparing results of different parameter sets.

Certain parameters may only need to be trained once or very rarely (e.g., when the device comprising the receiver is swapped for a different device). For example, the size of capacitance 226 and the phase delay may be trained and the optimal values may be stored for reuse if additional crosstalk cancelation training is performed at a later time to determine optimal values for one or more other parameters.

The crosstalk cancelation system 200 (or other crosstalk cancelation system described herein) may be located in any suitable component (or span multiple components) of a computing system (e.g., 100). For example, the system 200 may be part of a communications controller, such as I/O controller 110, CPU memory controller 112, external I/O controller 104, storage device controller 118, a controller of system memory device 107, a controller of an I/O device 105, or other suitable component. The system 200 may be used with any type of communication channel. For example, the system 200 may be used for a channel between a CPU and a memory device (e.g., a DRAM device, a DIMM, or other suitable form factor), a channel between a CPU and a storage device, a PCIe channel, a USB channel, a channel to communicate via any other protocol referenced herein, or any other channel between two devices or systems.

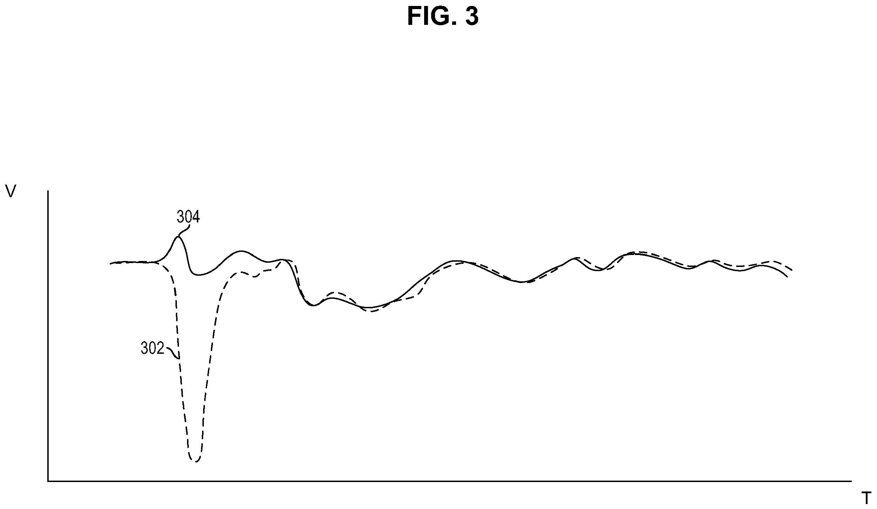

**FIG. 3** illustrates example waveforms illustrating crosstalk cancelation that may be performed by a crosstalk cancelation system (e.g., 200 or other crosstalk cancelation system described herein) in accordance with certain embodiments. Waveform 302 illustrates a graph of a voltage at a node of a data line (e.g., victim data line 212) as a function of time in the absence of a crosstalk cancelation system. For example, this node may be at the input of a receiver (e.g., 220) of a victim data line. As depicted, there is a large downward voltage swing early in the waveform. In this illustration, this swing is caused by the effects of far end crosstalk (e.g., due to a signal transferred on the aggressor data line 202). Waveform 304 illustrates a graph of the voltage on the same node of the data line as a function of time when a crosstalk cancelation system is utilized. As illustrated, the large downward voltage swing has been eliminated through crosstalk cancelation, resulting in a waveform with a lower voltage swing which is closer to the desired waveform and will result in increased bandwidth and/or decreased error rates.

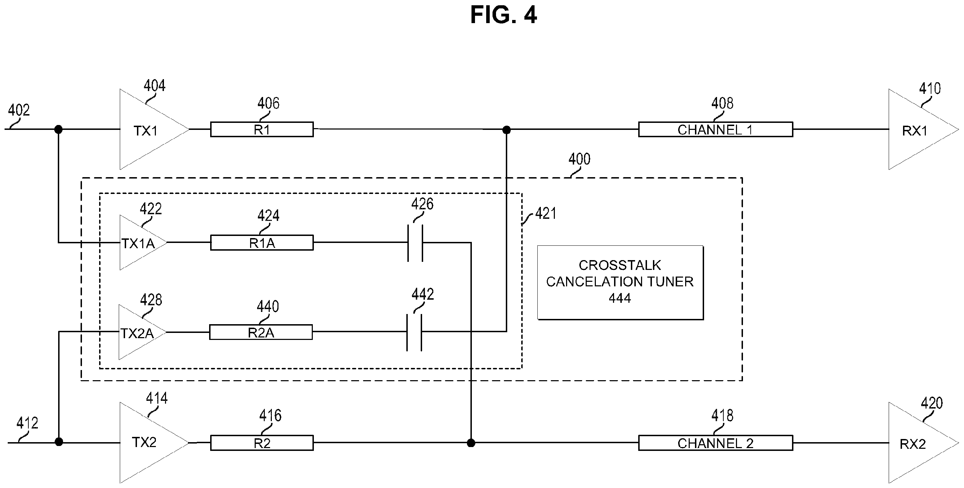

**FIG. 4** illustrates a transmit crosstalk cancelation system 400 for two victim data lines 402 and 412 in accordance with certain embodiments. In this embodiment, the victim data lines are also aggressor data lines with respect to each other. In this embodiment, data line 402 is coupled to main driver 404 with output impedance 406, channel 408, and receiver 410 while data line 412 is coupled to main driver 414 with output impedance 416, channel 418, and receiver 420. The systems and components depicted may have any suitable characteristics of similar systems and components described with respect to other FIGs. herein.

The crosstalk cancelation system 400 includes crosstalk cancelation circuitry 421 and crosstalk cancelation tuner 444. Crosstalk cancelation circuitry 421 includes auxiliary driver 422 with output impedance 424 and capacitor 426 coupled to a node on data line 402 before the main driver 404 and a node on data line 412 after the main driver 414. Crosstalk cancelation circuitry 421 also includes auxiliary driver 428 with output impedance 440 and capacitor 442 coupled to a node on data line 412 before the main driver 414 and a node on data line 402 after the main driver 404.

Auxiliary driver 422 with impedance 424 and capacitor 426 compensate for the far end crosstalk caused by data line 402 on data line 412 while auxiliary driver 428 with impedance 440 and capacitor 442 compensate for the far end crosstalk caused by data line 412 on data line 402.

Crosstalk cancelation tuner 444 may tune one or more parameters of the crosstalk cancelation circuitry 421 in a manner similar to that described above. For example, the crosstalk cancelation tuner 444 may tune parameters of the auxiliary drivers 422 or 428 or capacitors 426 or 442 (or other suitable parameters of the system 400) as part of a training procedure to achieve a suitable match between the phase and magnitude (with opposite polarity) of the crosstalk introduced into each data line by the other data line.

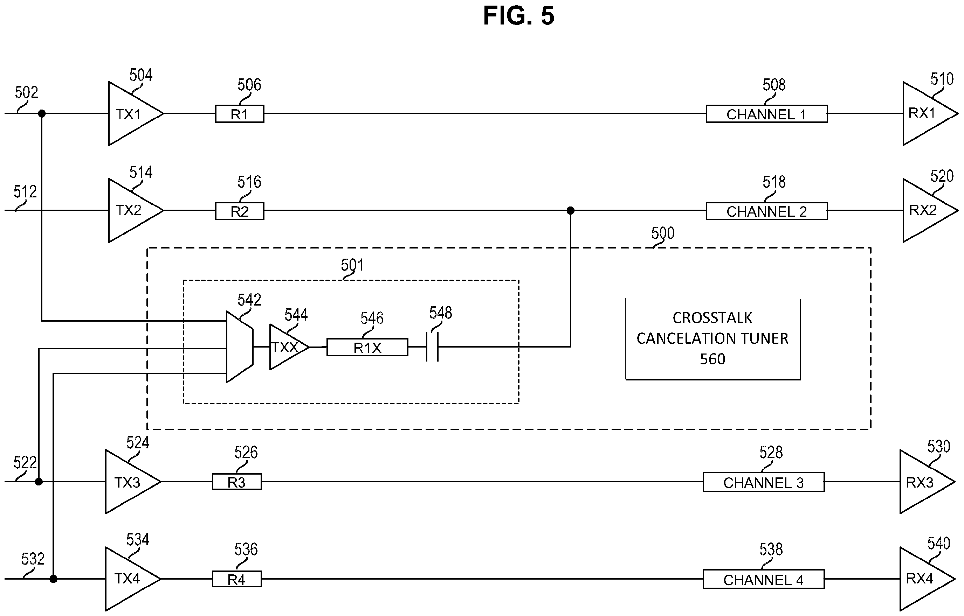

**FIG. 5** illustrates a transmit crosstalk cancelation system 500 enabling selectable aggressor data lines in accordance with certain embodiments. The systems and components depicted may have any suitable characteristics of similar systems and components described with respect to other FIGs. herein. The depicted embodiment allows flexibility in selecting the aggressor and victim data lines for crosstalk cancelation.

In this embodiment, data line 502 is coupled to main driver 504 with output impedance 506, channel 508, and receiver 510; data line 512 is coupled to main driver 514 with output impedance 516, channel 518, and receiver 520; data line 522 is coupled to main driver 524 with output impedance 526, channel 528, and receiver 530; and data line 532 is coupled to main driver 534 with output impedance 536, channel 538, and receiver 540.

The crosstalk cancelation system 500 includes a crosstalk cancelation circuit 501 that includes multiplexer 542, auxiliary driver 544 with output impedance 546, and capacitor 548 coupled to a victim data line 512. Multiplexer 542 is coupled to multiple potential aggressor data lines (e.g., 502, 522, 532). The multiplexer 542 is coupled to the data lines at nodes before the respective main drivers of the data lines and the crosstalk cancelation circuit output is coupled to the data line 512 at a node after the main driver 514 of the data line 512. System 500 also includes crosstalk cancelation tuner 560.

In this embodiment, the multiplexer 542 is configured (e.g., via an input signal) to couple to a selected aggressor data line. The crosstalk cancelation system 500 may then cancel far end crosstalk caused by the aggressor data line on the victim data line 512.

In some embodiments, crosstalk cancelation system 500 may include any number of selectable crosstalk cancelation circuits 501 coupled to victim data line 512 such that any number of aggressor data lines may be coupled to victim data line 512. Crosstalk cancelation system 500 may include additional crosstalk cancelation circuits 501 that are each coupled to one of the other data lines (e.g., 502, 522, or 532).

In some embodiments, multiple aggressor data lines may be coupled to a single victim line (whether through one or more crosstalk cancelation circuits 501 allowing selectable aggressor and victim data lines or through one or more hard wired auxiliary drivers and capacitors). In various embodiments, each coupling may include a respective auxiliary driver and capacitor or multiple aggressor lines may be coupled to the same auxiliary driver and capacitor and then to the victim data line.

Crosstalk cancelation tuner 560 may tune one or more parameters of the crosstalk cancelation system 500 in a manner similar to that described above. For example, the crosstalk cancelation tuner 560 may tune parameters of the auxiliary driver 544 or capacitor 548 (or other suitable parameters of the system 500) as part of a training procedure to achieve a suitable match between the phase and magnitude (with opposite polarity) of the crosstalk introduced into a victim line by an aggressor data line. In some embodiments, crosstalk cancelation tuner 560 may tune parameters of multiple different crosstalk cancelation circuits 501.

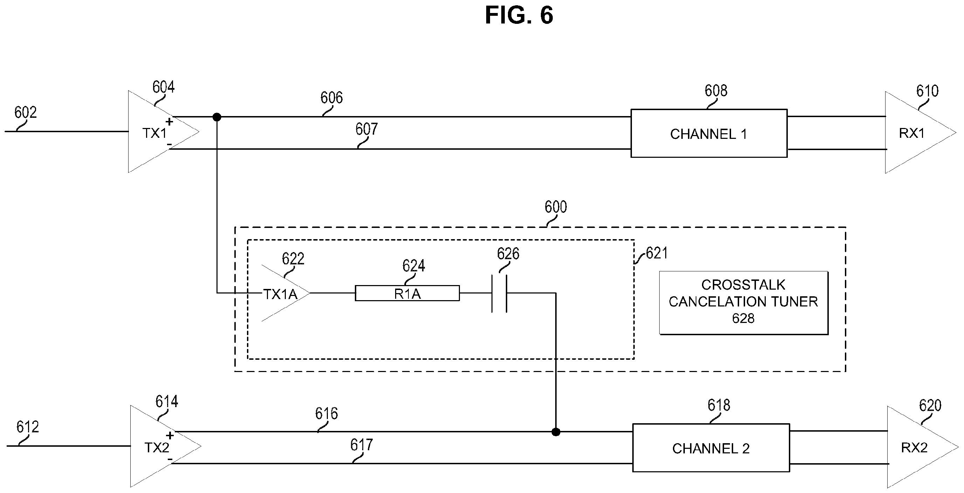

Although the embodiments above have focused on crosstalk cancelation systems for single ended data lines, other embodiments may provide crosstalk cancelation systems for differential pairs. FIG. 6 illustrates a transmit crosstalk cancelation system 600 for differential pair data lines in accordance with certain embodiments. The systems and components depicted may have any suitable characteristics of similar systems and components described with respect to other FIGs. herein.

In FIG. 6, single ended data transmitted on data line 602 is received at driver 604 (which may be referred to herein as a "main driver" for data line 602). The main driver converts the single ended data into data on a differential pair comprising data lines 606 and 607. Data on these lines travels through channel 608 to the receiver 610. Similarly, data transmitted on data line 612 is converted by driver 614 into data on a differential pair comprising data lines 616 and 617. The channels 608 and 618 may include the communication paths between the outputs of the drivers 604 and 614 and the inputs of the receivers 610 and 620. For example, such a path may include conductive traces, bonding pads, pins, or other suitable elements (e.g., of a CPU and of an I/O device). Transmission of data on the aggressor differential pair 606 and 607 from the main driver 604 to the receiver 610 may result in interference on one or both lines of the victim differential pair 616 and 617.

The far end crosstalk cancelation system 600 includes crosstalk cancelation circuitry 621 and crosstalk cancelation tuner 628. The crosstalk cancelation circuitry 621 includes an auxiliary driver 622 having an output impedance 624. Circuitry 621 also includes a capacitor 626. The input of the auxiliary driver 622 is coupled to the data line 607 (the output of the positive terminal of the main driver 604) at a node after the main driver 604. The auxiliary driver 622 uses the input signal to drive a capacitor 626, which is then coupled to data line 616 (the output of the positive terminal of the driver 614). The output of the capacitor that is fed to data line 616 is the crosstalk cancelation compensation signal and may have a polarity that is opposite to that of the far end crosstalk.

In various embodiments, the magnitude of the compensation signal may be varied by tuning one or more parameters of the circuit 621 (such as any of the parameters described above) via crosstalk cancelation tuner 628 (in a manner similar to that described above). In other embodiments, the parameters that affect the magnitude of the compensation signal are fixed (e.g., careful engineering may result in parameter values that cause the magnitude of the compensation signal to be within a desired margin of the magnitude of the far end crosstalk signal).

Although a particular embodiment is depicted in FIG. 6, other embodiments may include different configurations of crosstalk cancelation circuitry to cancel far end crosstalk. For example, in addition to or as an alternative to the crosstalk cancelation circuitry 621 depicted, an instance of crosstalk cancelation circuitry 621 may be included in various embodiments, with the input to this instance of circuitry 621 coupled to the output of the negative terminal of the main driver 604 and the output of this instance of circuitry 621 coupled to the output of the negative terminal of the driver 614.

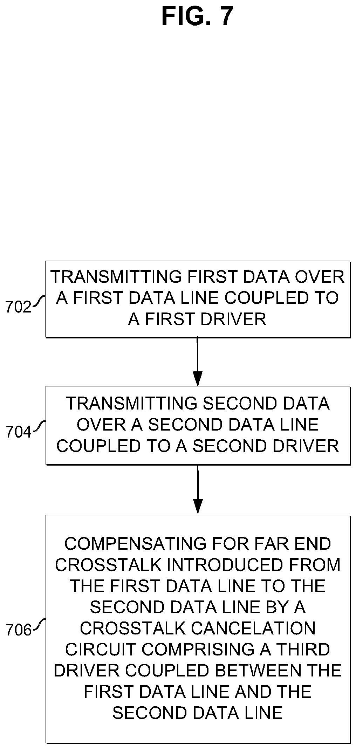

FIG. 7 illustrates a flow for canceling crosstalk in accordance with certain embodiments. 702 includes transmitting first data over a first data line coupled to a first driver. 704 includes transmitting second data over a second data line coupled to a second driver. 706 includes compensating for far end crosstalk introduced from the first data line to the second data line by a crosstalk cancelation circuit comprising a third driver coupled between the first data line and the second data line.

A design may go through various stages, from creation to simulation to fabrication. Data representing a design may represent the design in a number of manners. First, as is useful in simulations, the hardware may be represented using a hardware description language (HDL) or another functional description language. Additionally, a circuit level model with logic and/or transistor gates may be produced at some stages of the design process. Furthermore, most designs, at some stage, reach a level of data representing the physical placement of various devices in the hardware model. In the case where conventional semiconductor fabrication techniques are used, the data representing the hardware model may be the data specifying the presence or absence of various features on different mask layers for masks used to produce the integrated circuit. In some implementations, such data may be stored in a database file format such as Graphic Data System II (GDS II), Open Artwork System Interchange Standard (OASIS), or similar format.

In some implementations, software based hardware models, and HDL and other functional description language objects can include register transfer language (RTL) files, among other examples. Such objects can be machine-parsable such that a design tool can accept the HDL object (or model), parse the HDL object for attributes of the described hardware, and determine a physical circuit and/or on-chip layout from the object. The output of the design tool can be used to manufacture the physical device. For instance, a design tool can determine configurations of various hardware and/or firmware elements from the HDL object, such as bus widths, registers (including sizes and types), memory blocks, physical link paths, fabric topologies, among other attributes that would be implemented in order to realize the system modeled in the HDL object. Design tools can include tools for determining the topology and fabric configurations of system on chip (SoC) and other hardware device. In some instances, the HDL object can be used as the basis for developing models and design files that can be used by manufacturing equipment to manufacture the described hardware. Indeed, an HDL object itself can be provided as an input to manufacturing system software to cause the described hardware.

In any representation of the design, the data may be stored in any form of a machine readable medium. A memory or a magnetic or optical storage such as a disc may be the machine readable medium to store information transmitted via optical or electrical wave modulated or otherwise generated to transmit such information. When an electrical carrier wave indicating or carrying the code or design is transmitted, to the extent that copying, buffering, or re-transmission of the electrical signal is performed, a new copy is made. Thus, a communication provider or a network provider may store on a tangible, machine-readable medium, at least temporarily, an article, such as information encoded into a carrier wave, embodying techniques of embodiments of the present disclosure.

In various embodiments, a medium storing a representation of the design may be provided to a manufacturing system (e.g., a semiconductor manufacturing system capable of manufacturing an integrated circuit and/or related components). The design representation may instruct the system to manufacture a device capable of performing any combination of the functions described above. For example, the design representation may instruct the system regarding which components to manufacture, how the components should be coupled together, where the components should be placed on the device, and/or regarding other suitable specifications regarding the device to be manufactured.

A module as used herein or as depicted in the FIGs. refers to any combination of hardware, software, and/or firmware. As an example, a module includes hardware, such as a micro-controller, associated with a non-transitory medium to store code adapted to be executed by the micro-controller. Therefore, reference to a module, in one embodiment, refers to the hardware, which is specifically configured to recognize and/or execute the code to be held on a non-transitory medium. Furthermore, in another embodiment, use of a module refers to the non-transitory medium including the code, which is specifically adapted to be executed by the microcontroller to perform predetermined operations. And as can be inferred, in yet another embodiment, the term module (in this example) may refer to the combination of the microcontroller and the non-transitory medium. Often module boundaries that are illustrated as separate commonly vary and potentially overlap. For example, a first and a second module may share hardware, software, firmware, or a combination thereof, while potentially retaining some independent hardware, software, or firmware. In one embodiment, use of the term logic includes hardware, such as transistors, registers, or other hardware, such as programmable logic devices.

Logic may be used to implement any of the flows described or functionality of the various components such as CPU 102, external I/O controller 104, processor 108, cores 114A and 114B, I/O controller 110, CPU memory controller 112, storage device 106, system memory device 107, memory 116, memory devices 122, memory chips 123, controllers 126, storage device controller 118, address translation engine 120, program control logic 124, crosstalk cancelation systems (111, 113, 115, 200, 400, 500), subcomponents thereof, or other entity or component described herein. "Logic" may refer to hardware, firmware, software and/or combinations of each to perform one or more functions. In various embodiments, logic may include a microprocessor or other processing element operable to execute software instructions, discrete logic such as an application specific integrated circuit (ASIC), a programmed logic device such as a field programmable gate array (FPGA), a storage device containing instructions, combinations of logic devices (e.g., as would be found on a printed circuit board), or other suitable hardware and/or software. Logic may include one or more gates or other circuit components. In some embodiments, logic may also be fully embodied as software. Software may be embodied as a software package, code, instructions, instruction sets and/or data recorded on non-transitory computer readable storage medium. Firmware may be embodied as code, instructions or instruction sets and/or data that are hard-coded (e.g., nonvolatile) in storage devices.

Use of the phrase 'to' or `configured to,' in one embodiment, refers to arranging, putting together, manufacturing, offering to sell, importing, and/or designing an apparatus, hardware, logic, or element to perform a designated or determined task. In this example, an apparatus or element thereof that is not operating is still `configured to' perform a designated task if it is designed, coupled, and/or interconnected to perform said designated task. As a purely illustrative example, a logic gate may provide a 0 or a 1 during operation. But a logic gate `configured to' provide an enable signal to a clock does not include every potential logic gate that may provide a 1 or 0. Instead, the logic gate is one coupled in some manner that during operation the 1 or 0 output is to enable the clock. Note once again that use of the term `configured to' does not require operation, but instead focus on the latent state of an apparatus, hardware, and/or element, where in the latent state the apparatus, hardware, and/or element is designed to perform a particular task when the apparatus, hardware, and/or element is operating.

Furthermore, use of the phrases `capable of/to,' and or 'operable to,' in one embodiment, refers to some apparatus, logic, hardware, and/or element designed in such a way to enable use of the apparatus, logic, hardware, and/or element in a specified manner. Note as above that use of to, capable to, or operable to, in one embodiment, refers to the latent state of an apparatus, logic, hardware, and/or element, where the apparatus, logic, hardware, and/or element is not operating but is designed in such a manner to enable use of an apparatus in a specified manner.

A value, as used herein, includes any known representation of a number, a state, a logical state, or a binary logical state. Often, the use of logic levels, logic values, or logical values is also referred to as 1's and 0's, which simply represents binary logic states. For example, a 1 refers to a high logic level and 0 refers to a low logic level. In one embodiment, a storage cell, such as a transistor or flash cell, may be capable of holding a single logical value or multiple logical values. However, other representations of values in computer systems have been used. For example, the decimal number ten may also be represented as a binary value of 1010 and a hexadecimal letter A. Therefore, a value includes any representation of information capable of being held in a computer system.

Moreover, states may be represented by values or portions of values. As an example, a first value, such as a logical one, may represent a default or initial state, while a second value, such as a logical zero, may represent a non-default state. In addition, the terms reset and set, in one embodiment, refer to a default and an updated value or state, respectively. For example, a default value potentially includes a high logical value, i.e. reset, while an updated value potentially includes a low logical value, i.e. set. Note that any combination of values may be utilized to represent any number of states.

The embodiments of methods, hardware, software, firmware or code set forth above may be implemented via instructions or code stored on a machine-accessible, machine readable, computer accessible, or computer readable medium which are executable by a processing element. A non-transitory machine-accessible/readable medium includes any mechanism that provides (i.e., stores and/or transmits) information in a form readable by a machine, such as a computer or electronic system. For example, a non-transitory machine-accessible medium includes random-access memory (RAM), such as static RAM (SRAM) or dynamic RAM (DRAM); ROM; magnetic or optical storage medium; flash storage devices; electrical storage devices; optical storage devices; acoustical storage devices; other form of storage devices for holding information received from transitory (propagated) signals (e.g., carrier waves, infrared signals, digital signals); etc., which are to be distinguished from the non-transitory mediums that may receive information there from.

Instructions used to program logic to perform embodiments of the disclosure may be stored within a memory in the system, such as DRAM, cache, flash memory, or other storage. Furthermore, the instructions can be distributed via a network or by way of other computer readable media. Thus a machine-readable medium may include any mechanism for storing or transmitting information in a form readable by a machine (e.g., a computer), but is not limited to, floppy diskettes, optical disks, Compact Disc, Read-Only Memory (CD-ROMs), and magnetooptical disks, Read-Only Memory (ROMs), Random Access Memory (RAM), Erasable Programmable Read-Only Memory (EPROM), Electrically Erasable Programmable Read-Only Memory (EEPROM), magnetic or optical cards, flash memory, or a tangible, machine-readable storage used in the transmission of information over the Internet via electrical, optical, acoustical or other forms of propagated signals (e.g., carrier waves, infrared signals, digital signals, etc.). Accordingly, the computer-readable medium includes any type of tangible machine-readable medium suitable for storing or transmitting electronic instructions or information in a form readable by a machine (e.g., a computer).

Reference throughout this specification to "one embodiment" or "an embodiment" means that a particular feature, structure, or characteristic described in connection with the embodiment is included in at least one embodiment of the present disclosure. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

## Claims

1. An apparatus comprising:
a first data line (502) coupled to a first driver (504);
a second data line (512) coupled to a second driver (514); and
a crosstalk cancelation circuit (500) comprising a third driver (544) coupled between the first data line (502) and the second data line (512) and a capacitor (548) in series with the third driver (544), the crosstalk cancelation circuit (500) to compensate for far end crosstalk introduced from the first data line (502) to the second data line (512), **characterized in that** the crosstalk cancelation circuit further comprises
a multiplexer (542), coupled to multiple potential aggressor data lines (502, 522, 532), to selectively couple the crosstalk cancelation circuit (500) to the first data line (502); and
a tuning circuit (560) to adjust a parameter of the crosstalk cancelation circuit (500).

2. The apparatus of Claim 1, further comprising a second crosstalk cancelation circuit comprising a fourth driver coupled between the second data line (512) and the first data line (502), the second crosstalk cancelation circuit to compensate for far end crosstalk introduced from the second data line (512) to the first data line (502).

3. The apparatus of Claim 1, wherein the tuning circuit (560) is to adjust a slew rate of the third driver (544) of the crosstalk cancelation circuit (500) based on a magnitude of the far end crosstalk.

4. The apparatus of any one of Claims 1 or 3, wherein the tuning circuit (560) is to adjust a capacitance of a capacitor (548) of the crosstalk cancelation circuit (500) based on a magnitude of the far end crosstalk.

5. The apparatus of any one of Claims 1, 3 or 4, wherein the tuning circuit (560) is to adjust a phase delay of the third driver (544) of the crosstalk cancelation circuit (500) based on a phase of the far end crosstalk.

6. The apparatus of any one of Claims 1 or 3-5, wherein the tuning circuit (560) is to adjust the parameter of the crosstalk cancelation circuit (500) during a training procedure based on an amount of errors detected for training data transmitted over the second data line (512).

7. The apparatus of any one of Claims 1-6, wherein the apparatus comprises a processor (108) comprising a memory controller (112) comprising the crosstalk cancelation circuit (500).

8. The apparatus of Claim 7, further comprising a battery communicatively coupled to the processor (108), a display communicatively coupled to the processor (108), or a network interface communicatively coupled to the processor (108).

9. A method comprising:
transmitting first data over a first data line (502) coupled to a first driver (504);
transmitting second data over a second data line (512) coupled to a second driver (514);
compensating for far end crosstalk introduced from the first data line (502) to the second data line (512) by a crosstalk cancelation circuit (500) comprising a third driver (544) coupled between the first data line (502) and the second data line (512), wherein the crosstalk cancelation circuit (500) comprises a capacitor (548) coupled in series with the third driver (544); **characterized in that** the method further comprises:
selectively coupling the crosstalk cancelation circuit (500) to the first data line (502) by a multiplexer (542), coupled to multiple potential aggressor data lines (502, 522, 532); and
adjusting, by a tuning circuit (560), a parameter of the crosstalk cancelation circuit (560).

10. The method of Claim 9, further comprising compensating for far end crosstalk introduced from the second data line (512) to the first data line (502) by a second crosstalk cancelation circuit comprising a fourth driver coupled between the first data line (502) and the second data line (512).

## Patentansprüche

1. Vorrichtung, umfassend:
eine erste Datenleitung (502), die mit einem ersten Treiber (504) gekoppelt ist;
eine zweite Datenleitung (512), die mit dem zweiten Treiber (514) gekoppelt ist; und
eine Nebensprechunterdrückungsschaltung (500), umfassend einen dritten Treiber (544), der zwischen die erste Datenleitung (502) und die zweite Datenleitung (512) gekoppelt ist, und einen Kondensator (548) in Reihe mit dem dritten Treiber (544), wobei die Nebensprechunterdrückungsschaltung (500) dazu dient, das von der ersten Datenleitung (502) zur zweiten Datenleitung (512) eingeführte Fernnebensprechen zu kompensieren, **dadurch gekennzeichnet, dass** die Nebensprechunterdrückungsschaltung ferner umfasst einen Multiplexer (542), der mit mehreren potenziellen Aggressor-Datenleitungen (502, 522, 532) gekoppelt ist, um die Nebensprechunterdrückungsschaltung (500) selektiv mit der ersten Datenleitung (502) zu koppeln; und
eine Abstimmschaltung (560), um einen Parameter der Nebensprechunterdrückungsschaltung (500) anzupassen.

2. Vorrichtung nach Anspruch 1, die ferner eine zweite Nebensprechunterdrückungsschaltung umfasst, die einen vierten Treiber umfasst, der zwischen die zweite Datenleitung (512) und die erste Datenleitung (502) gekoppelt ist, wobei die zweite Nebensprechunterdrückungsschaltung dazu dient, das von der zweiten Datenleitung (512) in die erste Datenleitung (502) eingeführte Fernnebensprechen zu kompensieren.

3. Vorrichtung nach Anspruch 1, wobei die Abstimmschaltung (560) dazu dient, eine Anstiegsrate des dritten Treibers (544) der Nebensprechunterdrückungsschaltung (500) basierend auf einer Größe des Fernnebensprechens anzupassen.

4. Vorrichtung nach einem der Ansprüche 1 oder 3, wobei die Abstimmschaltung (560) dazu dient, eine Kapazität eines Kondensators (548) der Nebensprechunterdrückungsschaltung (500) basierend auf einer Größe des Fernnebensprechens anzupassen.

5. Vorrichtung nach einem der Ansprüche 1, 3 oder 4, wobei die Abstimmschaltung (560) dazu dient, eine Phasenverzögerung des dritten Treibers (544) der Nebensprechunterdrückungsschaltung (500) basierend auf einer Phase des Fernnebensprechens anzupassen.

6. Vorrichtung nach einem der Ansprüche 1 oder 3-5, wobei die Abstimmschaltung (560) dazu dient, den Parameter der Nebensprechunterdrückungsschaltung (500) während eines Trainingsvorgangs basierend auf einer Menge von Fehlern anzupassen, die für über die zweite Datenleitung (512) übertragene Trainingsdaten erkannt wurden.

7. Vorrichtung nach einem der Ansprüche 1-6, wobei die Vorrichtung einen Prozessor (108) umfasst, der eine Speichersteuerung (112) umfasst, die die Nebensprechunterdrückungsschaltung (500) umfasst.

8. Vorrichtung nach Anspruch 7, die ferner eine mit dem Prozessor (108) kommunizierend gekoppelte Batterie, eine mit dem Prozessor (108) kommunizierend gekoppelte Anzeige oder eine mit dem Prozessor (108) kommunizierend gekoppelte Netzwerk-Schnittstelle umfasst.

9. Verfahren, umfassend:
Übertragen von ersten Daten über eine erste Datenleitung (502), die mit einem ersten Treiber (504) gekoppelt ist;
Übertragen von zweiten Daten über eine zweite Datenleitung (512), die mit einem zweiten Treiber (514) gekoppelt ist;
Kompensieren für Fernnebensprechen, das von der ersten Datenleitung (502) in die zweite Datenleitung (512) eingeführt wird, durch eine Nebensprechunterdrückungsschaltung (500), die einen dritten Treiber (544) umfasst, der zwischen die erste Datenleitung (502) und die zweite Datenleitung (512) gekoppelt ist, wobei die Nebensprechunterdrückungsschaltung (500) einen Kondensator (548) umfasst, der mit dem dritten Treiber (544) in Reihe gekoppelt ist; **dadurch gekennzeichnet, dass** das Verfahren ferner umfasst:
selektives Koppeln der Nebensprechunterdrückungsschaltung (500) mit der ersten Datenleitung (502) durch einen Multiplexer (542), der mit mehreren potenziellen Aggressor-Datenleitungen (502, 522, 532) gekoppelt ist; und Anpassen eines Parameters der Nebensprechunterdrückungsschaltung (560) durch eine Abstimmschaltung (560).

10. Verfahren nach Anspruch 9, das ferner das Kompensieren des von der zweiten Datenleitung (512) in die erste Datenleitung (502) eingeführten Fernnebensprechens durch eine zweite Nebensprechunterdrückungsschaltung umfasst, die einen zwischen die erste Datenleitung (502) und die zweite Datenleitung (512) gekoppelten vierten Treiber umfasst.

## Revendications

1. Appareil comprenant :
une première ligne de données (502) couplée sur un premier dispositif de pilotage (504) ;
une seconde ligne de données (512) couplée sur un deuxième dispositif de pilotage (514) ; et
un circuit d'annulation de diaphonie (500) comprenant un troisième dispositif de pilotage (544) couplé entre la première ligne de données (502) et la seconde ligne de données (512) et un condensateur (548) en série avec le troisième dispositif de pilotage (544), le circuit d'annulation de diaphonie (500) ayant pour objet de compenser une diaphonie d'extrémité éloignée introduite depuis la première ligne de données (502) sur la seconde ligne de données (512), **caractérisé en ce que** le circuit d'annulation de diaphonie comprend en outre :
un multiplexeur (542) couplé sur de multiples lignes de données d'agresseur potentiel (502, 522, 532), pour coupler sélectivement le circuit d'annulation de diaphonie (500) sur la première ligne de données (502) ; et
un circuit de syntonisation (560) pour régler un paramètre du circuit d'annulation de diaphonie (500).

2. Appareil selon la revendication 1, comprenant en outre un second circuit d'annulation de diaphonie comprenant un quatrième dispositif de pilotage couplé entre la seconde ligne de données (512) et la première ligne de données (502), le second circuit d'annulation de diaphonie ayant pour objet de compenser une diaphonie d'extrémité éloignée introduite depuis la seconde ligne de données (512) sur la première ligne de données (502).

3. Appareil selon la revendication 1, dans lequel le circuit de syntonisation (560) a pour objet de régler une vitesse de balayage du troisième dispositif de pilotage (544) du circuit d'annulation de diaphonie (500) sur la base d'une amplitude de la diaphonie d'extrémité éloignée.

4. Appareil selon l'une quelconque des revendications 1 ou 3, dans lequel le circuit de syntonisation (560) a pour objet de régler une capacité d'un condensateur (548) du circuit d'annulation de diaphonie (500) sur la base d'une amplitude de la diaphonie d'extrémité éloignée.

5. Appareil selon l'une quelconque des revendications 1, 3 ou 4, dans lequel le circuit de syntonisation (560) a pour objet de régler un retard de phase du troisième dispositif de pilotage (544) du circuit d'annulation de diaphonie (500) sur la base d'une phase de la diaphonie d'extrémité éloignée.

6. Appareil selon l'une quelconque des revendications 1 ou 3 à 5, dans lequel le circuit de syntonisation (560) a pour objet de régler le paramètre du circuit d'annulation de diaphonie (500) pendant une procédure d'apprentissage basée sur une quantité d'erreurs détectées pour des données d'apprentissage transmises sur la seconde ligne de données (512).

7. Appareil selon l'une quelconque des revendications 1 à 6, dans lequel l'appareil comprend un processeur (108) comprenant un contrôleur de mémoire (112) comprenant le circuit d'annulation de diaphonie (500).

8. Appareil selon la revendication 7, comprenant en outre une batterie couplée en termes de communication sur le processeur (108), un affichage couplé en termes de communication sur le processeur (108) ou une interface de réseau couplée en termes de communication sur le processeur (108).

9. Procédé comprenant :
la transmission de premières données sur une première ligne de données (502) couplée sur un premier dispositif de pilotage (504) ;
la transmission de secondes données sur une seconde ligne de données (512) couplée sur un deuxième dispositif de pilotage (514) ;
la compensation d'une diaphonie d'extrémité éloignée introduite depuis la première ligne de données (502) sur la seconde ligne de données (512) par un circuit d'annulation de diaphonie (500) comprenant un troisième dispositif de pilotage (544) couplé entre la première ligne de données (502) et la seconde ligne de données (512), dans lequel le circuit d'annulation de diaphonie (500) comprend un condensateur (548) couplé en série avec le troisième dispositif de pilotage (544) ; **caractérisé en ce que** le procédé comprend en outre :
le couplage sélectif du circuit d'annulation de diaphonie (500) sur la première ligne de données (502) par un multiplexeur (542), couplé sur de multiples lignes de données d'agresseur potentiel (502, 522, 532) ; et
le réglage, par un circuit de syntonisation (560), d'un paramètre du circuit d'annulation de diaphonie (560).

10. Procédé selon la revendication 9, comprenant en outre la compensation d'une diaphonie d'extrémité éloignée introduite depuis la seconde ligne de données (512) sur la première ligne de données (502) par un second circuit d'annulation de diaphonie comprenant un quatrième dispositif de pilotage couplé entre la première ligne de données (502) et la seconde ligne de données (512).
